# EUROPEAN PATENT SPECIFICATION

(11) **EP 3 088 637 B1**
(45) Date of publication and mention of the grant of the patent: **04.08.2021**
(21) Application number: 15165632.9
(22) Date of filing: 29.04.2015
(51) Int. Cl.: E04H 12/08

(54) **TOWER OF SUPPORTING A WIND TURBINE, METHOD FOR MANUFACTURING THE TOWER AND METHOD FOR PRODUCING ELECTRICITY**
TURM ZUM TRAGEN EINER WINDTURBINE, VERFAHREN ZUR HERSTELLUNG DES TURMS UND VERFAHREN ZUR ERZEUGUNG VON ELEKTRIZITÄT
TOUR DE SUPPORT D'UNE ÉOLIENNE, PROCÉDÉ DE FABRICATION D'UNE TELLE TOUR ET PROCÉDÉ POUR PRODUIRE D'ÉLECTRICITÉ

(43) Date of publication of application: 02.11.2016
(73) Proprietor: Siemens Gamesa Renewable Energy A/S, 7330 Brande (DK)
(72) Inventor: GREVE, Jeppe, 8600 Silkeborg (DK); MIKKELSEN, Jens Arne, 7400 Herning (DK)
(74) Representative: Aspacher, Karl-Georg

(56) References cited:
- EP-A1- 2 213 876
- EP-A2- 1 544 460
- EP-A2- 2 067 914
- WO-A1-2006/077084
- WO-A1-2011/147473
- US-A1- 2012 248 281
- None

## Description

### BACKGROUND OF THE INVENTION

### 1. FIELD OF THE INVENTION

The invention refers to a tower for supporting a wind turbine, a method for manufacturing the tower and a method for producing electricity with the aid of the wind turbine which is supported by the tower.

### 2. DESCRIPTION OF THE RELATED ART

For instance, the tower for supporting a wind turbine (wind turbine tower) is a steel tower. Document EP 1 544 460 A2 discloses such a tower. The steel tower comprises tower wall segments of steel. These tower wall segments are welded together.

There are external electrical wind turbine components which are installed outside of the wind turbine tower. For instance, such an external electrical component is a navigation light, a cell phone antenna or a temperature sensor.

The external electrical wind turbine component is often electrically connected with an internal electrical wind turbine component like a control unit of the wind turbine.

For instance, an electrical connection of an internal electrical wind turbine component and an external electrical wind turbine component is implemented with the aid of a cable. The cable can be guided through the wind turbine tower by drilling a hole into a tower wall segment. The drilling of the hole into the tower wall segment can cause a weakening of the tower wall segment and hence a weakening complete tower structure of the tower.

### SUMMARY OF THE INVENTION

It is an objective of the invention to provide a possibility of electrically connecting of an internal electrical wind power component and an external electrical wind power component without weakening of the wind turbine tower structure.

This objective is achieved by the invention specified in the claims.

According the invention a tower according to appended claim 1 for supporting a wind turbine is provided. The tower comprises at least one first tower wall segment of steel, at least one second tower wall segment of steel and at least one tower wall connecting element of steel. The tower wall connecting element is arranged between the first tower wall segment and the second tower wall segment. The first tower wall segment and the tower wall connecting element are welded together and the second tower wall segment and the tower wall connecting element are welded together. The tower wall connecting element comprises at least one cable duct for guiding a cable from a tower inside of the tower to a tower outside of the tower.

In addition to the tower, a method according to appended claim 9 for manufacturing the tower is provided.

Concerning an additional aspect of the invention, a method according to appended claim 10 for producing electricity with the aid of a wind turbine is provided.

The tower is a segmented steel tower. A main tower material (material of the tower wall segments and material of the tower wall connecting element) of the tower is steel (iron alloy). The cable duct of the tower wall connecting element is a hole, e.g. a bore or a channel of the tower wall connecting element through which a cable can be passed. The cable duct is prefabricated: Before the welding of the tower wall connecting element and tower wall segments the cable duct is incorporated into the tower wall connecting element. For instance, the cable duct is the result of drilling of a hole into the tower wall connecting element. In this case, the tower wall connecting element should be reinforced.

The tower wall segments and the tower wall connecting element are welded together. So, there are welding connections between the tower wall segments and the tower wall connecting element. By that, welding zones of the tower are defined. Within the welding connection and welding zone respectively the cable duct is located.

The tower wall segments comprise a plate-like structure extending in a thickness direction and in two different lateral directions. The tower wall segments can be planar plates or almost planar plates. In addition, the tower wall segments may be cylindrically shaped or cone-shaped. A combination of the afore-mentioned geometrical shapes is possible, too.

Preferably, an extent of the tower wall segments in the thickness direction is selected from the range between 20 mm to 100 mm. for instance the thickness is between 30 mm and 70 mm. The lateral extent of the tower wall segments is selected from the range between 1 m and 5 m and in particular between 2 m and 4 m.

The first tower wall segment and the second tower wall segment can comprise different shapes. Identical or similar shapes of the tower wall segments are possible, too.

The wind turbine tower is assembled with the aid of a number of tower wall segments. For instance, 30, 40 or more tower wall segments are assembled together by welding. Between the tower wall segments tower wall connecting elements are arranged.

Thereby, a size of the individual tower wall segments may be small enough for an easy transportation on a truck, on a ship or on a train. Nevertheless, the wall segments may have a larger size than conventional tower wall segments.

The tower which is assembled with the aid of the tower wall segments and the tower wall connecting elements may have a tower diameter of more than 4 m, in particular more than 6 m. More than 10 m are possible, too. In addition, it is possible that the height if the tower is larger than 60 m, in particular larger than 100 m or 150 m.

At the top of the tower a nacelle of a wind turbine may be mounted. The nacelle comprises a hub with one or more rotor blades which are fixed at the hub. The hub is connected to a rotor. By moving the rotor a generator is driven for the production of electricity.

The tower wall connecting element comprises at least one first sub tower wall connecting element with steel and at least one second sub tower wall connecting element with steel and the cable duct is arranged between the first sub tower wall connecting element and the second sub tower wall connecting element. The first sub tower wall connecting element and the second sub tower wall connecting element are welded together. The result is a welding connection between the sub tower wall connecting elements. With this specific assembly, cable ducts can be arranged in the sub tower wall connecting elements. At least one cable duct is arranged in the welding connection between the sub tower wall connecting elements. The cable duct comprises a cable bushing which is incorporated into the welding connection. The sub tower wall connecting elements and this cable bushing are welded together.

For the described welding processes it is advantageous to use at least one welding aid for simplifying the welding process. The welding components which have to be welded together can comprise suitable shapes for the welding, too. This refers especially to the tower wall connecting elements. Therefore, in a preferred embodiment, the tower wall connecting element, the first sub tower wall connecting element and/or the second sub tower wall connecting element comprise at least one welding bracket. The welding bracket is adapted to bring the welding components correctly together.

The tower wall connecting elements have as well as the sub tower wall connecting elements suitable shapes and sizes for the connecting of the tower wall segments. For instance, this refers to the welding bracket. I a preferred embodiment, the tower wall connecting element, the first sub tower wall connecting element and/or the second sub tower wall connecting element comprise at least one shape which is selected from the group consisting of ring and bar.

In a preferred embodiment, the tower wall connecting element, the first sub tower wall connecting element and/or the second sub tower wall connecting element comprises at least one welding edge which is selected form the group consisting of horizontally oriented welding edge and vertically oriented welding edge. The result is that the tower wall connecting elements are vertically or horizontally oriented. Via the welding edges the tower wall connecting elements are welded together with the respective tower wall segments. This results in clearly defined welding connections. The welding can be carried out easily by a welding robot.

For instance, the above mentioned welding bracket comprises at least one circumferential bracket ring which is substantially perpendicular oriented to a longitudinal direction of the tower. Thereby, the welding bracket can be a part of the bracket ring. Preferably the welding bracket comprises a complete circumferential bracket ring. The bracket ring is the tower connecting element. The welding edges are horizontally oriented. The tower wall segments are assembled one above the other.

Alternatively, the above mentioned welding bracket comprises at least one bar which is substantially parallel oriented to the longitudinal direction of the tower. Concerning this solution, the welding edges are vertically oriented. The tower wall segments are assembled together next to each the other.

Preferably, least one internal electrical wind turbine component of the wind turbine is electrically connected with at least one external electrical wind turbine component by at least one cable which is passed through the cable duct. Preferably, the external electrical wind turbine component is at least one component which is selected from the group consisting of a temperature sensor (like PT100) and an antenna.

Thereby it is not necessary that the internal electrical wind turbine component is located directly in a tower interior of the tower. The internal electrical wind turbine component is just electrically connected via the tower interior. In contrast to the internal electrical wind turbine component the external electrical wind turbine component is located outside of the tower. With the aid of the invention, it is not necessary to electrically contact the external component with the aid of an additional cable which is susceptible to lightning. In addition, the number of external cables is reduced to a minimum.

The cable duct comprises a diameter which is applicable for a passing a cable through the cable duct. A dimension of the cable bushing depends on a structure of the tower or depends on the needed size of the equipment. It is preferred that the cable bushing comprises an inner duct diameter which is selected from the range between 10 mm and 30 mm. For instance, the inner cable bushing diameter comprises 20 mm. In addition, preferably, the cable bushing comprises an outer cable bushing diameter which is selected from the range between 30 mm to 70 mm. With these diameters an electrical connection between the internal electrical wind turbine component and the external electrical component is possible. In addition, the high stability of the tower is guaranteed. The tower is not weakened by the use of the cable duct with the cable bushing.

As described above, the cable duct can comprise different suitable shapes. The cable bushing is implemented into the welding connection between the sub tower connecting elements. Gaps for taking the cable bushing can be included into in the sub tower connecting elements.

In a preferred embodiment, the tower wall connection element comprises a number of cable ducts. These cable ducts can be distributed in just one tower wall connecting element. In addition, it is possible that the cable ducts are distributed along the complete tower with a lot of tower wall connecting elements and a lot of sub tower wall connecting elements.

Moreover, it is possible that not all of these cable ducts are used for the passing through of cables. In a preferred embodiment, the tower wall connecting element, the first sub tower wall connecting element and/or the second sub tower wall connecting element comprise at least one sealed cable duct. There are cable ducts (holes) which are filled. In order to stabilize the tower, not used cable ducts are sealed, e.g. by welding material or other suitable filling materials. With the invention following advantages are connected:
- Due to clear definitions of the extents and orientations of the tower wall components the assembling of the tower welding robots can be used. The assembling is relatively cheap.
- The number of external cables outside of the tower is reduced.
- Due to the reduced number of external cables the tower is lightning-protected.
- A high flexibility position of the different (internal and external) electrical components of wind turbine is possible. In addition, these components can be positioned precisely according to local demands.
- The tower is made out of tower material with steel. Guiding a cable through this tower material can give heavily extra costs due to the need of reinforcement of the steel structure in this area. Because the tower wall connecting element comprises the cable duct, it is not necessary to drill a hole into the tower wall segments which would result in a weakening of the complete tower construction without the mentioned reinforcement.
- Possibly heavy clamp and holding components for cables are not necessary for the electrical connection of internal electrical wind turbine components and external electrical wind turbine components. The resulting assembly is architectural clean in comparison to the state of the art.

### BRIEF DESCRIPTION OF THE DRAWINGS

Further features and advantages of the invention are produced from the description of exemplary embodiments with reference to the drawings. The drawings are schematic.

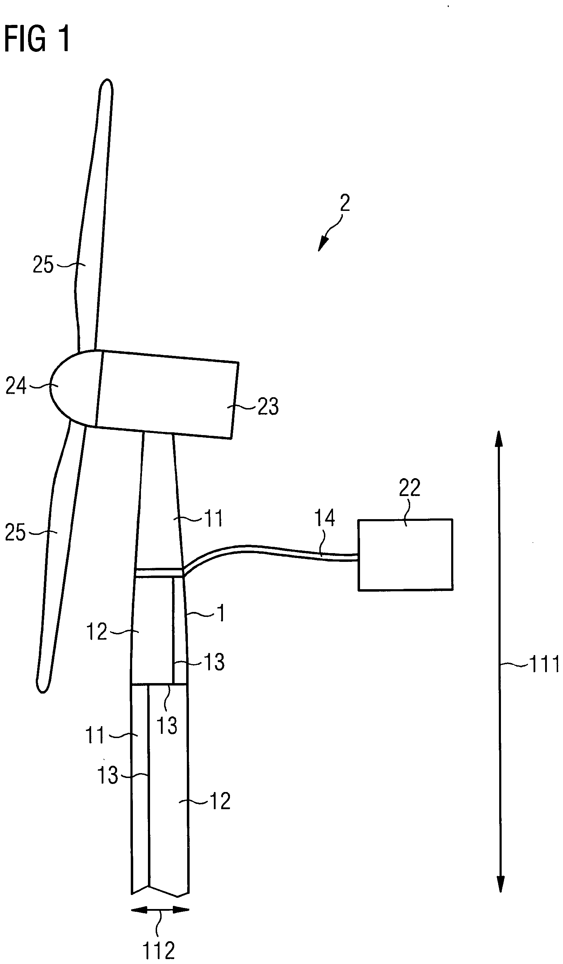

Figure 1 shows a wind turbine which is supported by the wind turbine tower.
Figure 2 shows a section of figure 1 with horizontally oriented welding zone.
Figure 3 shows a section of figure 1 with vertically oriented welding zone.
Figure 4 shows a welding bracket in a prospective view.
Figure 5 shows details of the cable duct with a cable bushing.

Given is a tower 1 for supporting a wind turbine 2. The wind turbine 1 comprises a nacelle 23 which is arranged on the top of the tower 1. A hub 24 and rotor blades are further components of the wind turbine 2.

The tower 1 is a segmented steel tower. The tower is segmented in a longitudinal direction 111 of the tower 1 and in a vertical direction 112 of the tower 1.

The tower 1 comprises at least one first tower wall segment 11 with steel, at least one second tower wall segment 12 with steel, at least one tower wall connecting element 13 with steel. The tower wall connecting element 13 is arranged between the first tower wall segment 11 and the second tower wall segment 12.

The first tower wall segment 11 and the tower wall connecting element 13 are welded together as well as the second tower wall segment 12 and the tower wall connecting element 13. Thereby, welding zones are defined.

At least one cable duct 130 for guiding a cable 14 from a tower inside 16 of the tower 1 to a tower outside 17 of the tower 1 is arranged in or at the tower wall connecting element 13 and hence in the welding zones.

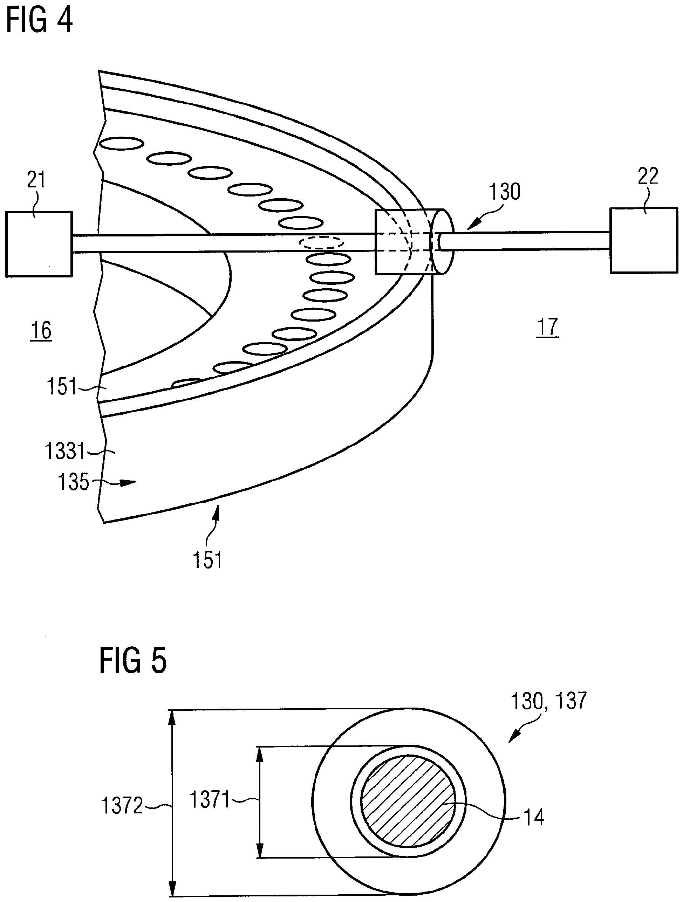

The tower wall connecting element 13 comprises at least one welding bracket 135 (figure 4). The welding bracket 135 is a ring bracket 1331. The ring bracket 135 comprises horizontally oriented welding edges 151. Alternatively, the welding bracket 135 comprises a bar 1332 with vertically oriented welding edges 152.

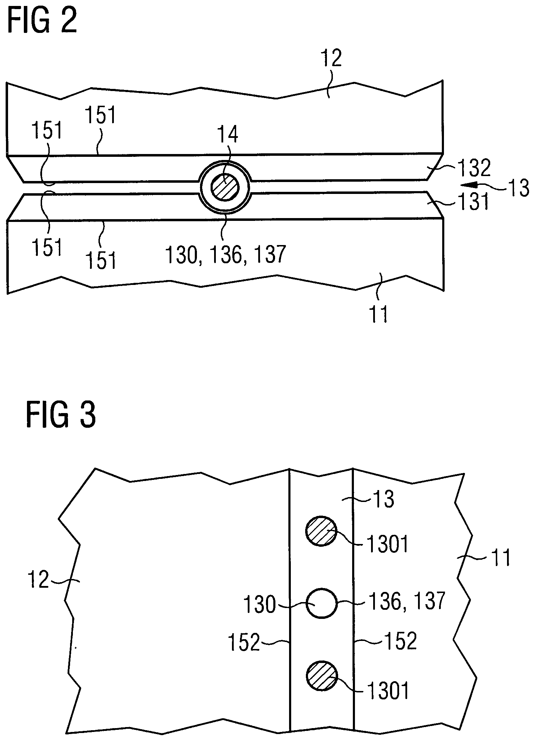

The tower wall connecting element 13 comprises a first sub tower wall connecting element 131 with steel and at least one second sub tower wall connecting element 132 with steel (figure 2). The cable duct 130 is arranged between the first sub tower wall connecting element 131 and the second sub tower wall connecting element 132. The first sub tower wall connecting element 131 and the second sub tower wall connecting element 132 are welded together.

With the aid of the invention it is possible to electrically contact an internal electrical wind turbine component (e.g. a control unit) 21 and an external electrical component (e.g. an antenna or a temperature sensor like PT100) 22. For that, a cable 14 is passed through the cable duct 130.

The cable duct 130 comprises a bore 136 which is drilled into the tower connecting element 13. The cable duct comprises a cable bushing 137 (figure 5). The cable bushing 137 comprises an inner cable bushing diameter 1371 of 20 mm an outer cable bushing diameter 1372 of 60 mm.

The complete tower comprises a number of cable ducts 130. But not all cable ducts 130 are used. The not used cable ducts are sealed. For the sealing welding material is used. There are sealed cable ducts 1301.

For the manufacturing of the tower the steps according to appended claim 9 are carried out.

The wind turbine 2 which is supported by a tower 1 is used for the production of electricity.

## Claims

1. Tower (1) for supporting a wind turbine (2) with
- at least one first tower wall segment (11) of steel;
- at least one second tower wall segment (12) of steel;
- at least one tower wall connecting element (13) of steel which is arranged between the first tower wall segment (11) and the second tower wall segment (12); wherein
- the first tower wall segment (11) and the tower wall connecting element (13) are welded together;
- the second tower wall segment (12) and the tower wall connecting element (13) are welded together; and
- the tower wall connecting element (13) comprises at least one cable duct (130) for guiding a cable (14) from the inside (16) of the tower (1) to the outside (17) of the tower (1) wherein
- the tower wall connecting element (13) comprises at least one first sub tower wall connecting element (131) of steel and at least one second sub tower wall connecting element (132) of steel; **characterised in that**
- the first sub tower wall connecting element (131) and the second sub tower wall connecting element (132) are welded together,
wherein the cable duct (130) comprises a cable bushing (137) which is arranged in the welding connection between the first sub tower wall connecting element (131) and the second sub tower wall connecting element (132), such that the cable bushing (137) and the first sub tower wall connecting element (131) and the second sub tower wall connecting element (132) are welded together.

2. Tower according to claim 1, wherein the tower wall connecting element (13), the first sub tower wall connecting element (131) and/or the second sub tower wall connecting element (132) comprise at least one welding bracket (135).

3. Tower according to one of the claims 1 or 2, wherein the tower wall connecting element (13), the first sub tower wall connecting element (131) and/or the second sub tower wall connecting element comprise at least one shape (133) which is selected from the group consisting of ring (1331) and bar (1332).

4. Tower according to one of the claims 1 to 3, wherein the tower comprises at least one external wind turbine electrical component (22) and at least one internal electrical wind turbine component (21) of the wind turbine (2) which is electrically connected with said at least one external electrical wind turbine component (22) by at least one cable (14) which is passed through the cable duct (130).

5. Tower according to claim 4, wherein the external electrical wind turbine component (22) is at least one component which is selected from the group consisting of a temperature sensor and an antenna.

6. Tower according to one of the claims 1 to 5, wherein the tower wall connecting element (13), the first sub tower wall connecting element (131) and/or the second sub tower wall connecting element comprises at least one welding edge (15) which is selected form the group consisting of horizontally oriented welding edge (151) and vertically oriented welding edge (152).

7. Tower according to one of the claims 1 to 6, wherein the cable bushing (137) comprises an inner cable bushing diameter (1371) which is selected from the range between 10 mm and 30 mm.

8. Tower according to one of the claims 1 to 7, wherein the cable bushing (137) comprises an outer cable bushing diameter (1372) which is selected from the range between 30 mm and 70 mm.

9. Method for manufacturing a tower according to one of the claims 1 to 8 with following steps:
a) providing of the first tower wall segment (11), providing of the second tower wall segment (12) and providing of the tower wall connecting element (13); and
b) welding together the tower wall segments (11, 12) and the tower wall connecting element (13) such that the tower wall connecting element is arranged between the tower wall segments wherein the method comprises
c) providing the tower wall connecting element (13) with at least one first sub tower wall connecting element (131) of steel and at least one second sub tower wall connecting element (132) of steel; and
d) arranging the cable duct between the first sub tower wall connecting element (131) and the second sub tower wall connecting element (132),
e) welding together the first sub tower wall connecting element (131) and the second sub tower wall connecting element (132),
wherein the cable duct (130) comprises a cable bushing (137) which is arranged in the welding connection between the first sub tower wall connecting element (131) and the second sub tower wall connecting element (132), such that the cable bushing (137) and the first sub tower wall connecting element (131) and the second sub tower wall connecting element (132) are welded together.

10. Method for producing electricity with the aid of a wind turbine (2) which is supported by the tower (1) according to one of the claims 1 to 8.

## Patentansprüche

1. Turm (1) zum Tragen einer Windturbine (2) mit
- mindestens einem ersten Turmwandsegment (11) aus Stahl,
- mindestens einem zweiten Turmwandsegment (12) aus Stahl,
- mindestens einem Turmwandverbindungselement (13) aus Stahl, das zwischen dem ersten Turmwandsegment (11) und dem zweiten Turmwandsegment (12) angeordnet ist, wobei
- das erste Turmwandsegment (11) und das Turmwandverbindungselement (13) miteinander verschweißt sind,
- das zweite Turmwandsegment (12) und das Turmwandverbindungselement (13) miteinander verschweißt sind und
- das Turmwandverbindungselement (13) mindestens einen Kabelkanal (130) zum Führen eines Kabels (14) von der Innenseite (16) des Turms (1) zur Außenseite (17) des Turms (1) umfasst, wobei
- das Turmwandverbindungselement (13) mindestens ein erstes Turmwandverbindungsteilelement (131) aus Stahl und mindestens ein zweites Turmwandverbindungsteilelement (132) aus Stahl umfasst, **dadurch gekennzeichnet, dass**
- das erste Turmwandverbindungsteilelement (131) und das zweite Turmwandverbindungsteilelement (132) miteinander verschweißt sind,
wobei der Kabelkanal (130) eine Kabeldurchführung (137) umfasst, die in der Schweißverbindung zwischen dem ersten Turmwandverbindungsteilelement (131) und dem zweiten Turmwandverbindungsteilelement (132) angeordnet ist, so dass die Kabeldurchführung (137) und das erste Turmwandverbindungsteilelement (131) und das zweite Turmwandverbindungsteilelement (132) miteinander verschweißt sind.

2. Turm nach Anspruch 1, wobei das Turmwandverbindungselement (13), das erste Turmwandverbindungsteilelement (131) und/oder das zweite Turmwandverbindungsteilelement (132) mindestens eine Schweißschelle (135) umfasst.

3. Turm nach einem der Ansprüche 1 oder 2, wobei das Turmwandverbindungselement (13), das erste Turmwandverbindungsteilelement (131) und/oder das zweite Turmwandverbindungsteilelement mindestens eine Form (133) umfasst, die aus der Gruppe ausgewählt ist, welche aus einem Ring (1331) und einer Stange (1332) besteht.

4. Turm nach einem der Ansprüche 1 bis 3, wobei der Turm mindestens eine externe elektrische Windturbinenkomponente (22) und mindestens eine interne elektrische Windturbinenkomponente (21) der Windturbine (2) umfasst, die über mindestens ein Kabel (14), das durch den Kabelkanal (130) hindurchgeführt wird, elektrisch mit der mindestens einen externen elektrischen Windturbinenkomponente (22) verbunden ist.

5. Turm nach Anspruch 4, wobei es sich bei der externen elektrischen Windturbinenkomponente (22) um mindestens eine Komponente handelt, die aus der Gruppe ausgewählt ist, welche aus einem Temperatursensor und einer Antenne besteht.

6. Turm nach einem der Ansprüche 1 bis 5, wobei das Turmwandverbindungselement (13), das erste Turmwandverbindungsteilelement (131) und/oder das zweite Turmwandverbindungsteilelement mindestens eine Schweißkante (15) umfasst, die aus der Gruppe ausgewählt ist, welche aus einer horizontal ausgerichteten Schweißkante (151) und einer vertikal ausgerichteten Schweißkante (152) besteht.

7. Turm nach einem der Ansprüche 1 bis 6, wobei die Kabeldurchführung (137) einen Kabeldurchführungsinnendurchmesser (1371) umfasst, der aus einem Bereich ausgewählt ist, welcher zwischen 10 mm und 30 mm liegt.

8. Turm nach einem der Ansprüche 1 bis 7, wobei die Kabeldurchführung (137) einen Kabeldurchführungsaußendurchmesser (1372) umfasst, der aus einem Bereich ausgewählt ist, welcher zwischen 30 mm und 70 mm liegt.

9. Verfahren zum Herstellen eines Turms nach einem der Ansprüche 1 bis 8 mit folgenden Schritten:
a) Bereitstellen des ersten Turmwandsegments (11), des zweiten Turmwandsegments (12) und des Turmwandverbindungselements (13) und
b) derartiges Verschweißen der Turmwandsegmente (11, 12) und des Turmwandverbindungselements (13) miteinander, dass das Turmwandverbindungselement zwischen den Turmwandsegmenten angeordnet ist, wobei das Verfahren Folgendes umfasst:
c) Bereitstellen des Turmwandverbindungselements (13) mit mindestens einem ersten Turmwandverbindungsteilelement (131) aus Stahl und mindestens einem zweiten Turmwandverbindungsteilelement (132) aus Stahl und
d) Anordnen des Kabelkanals zwischen dem ersten Turmwandverbindungsteilelement (131) und dem zweiten Turmwandverbindungsteilelement (132),
e) Verschweißen des ersten Turmwandverbindungsteilelements (131) und des zweiten Turmwandverbindungsteilelements (132) miteinander,
wobei der Kabelkanal (130) eine Kabeldurchführung (137) umfasst, die in der Schweißverbindung zwischen dem ersten Turmwandverbindungsteilelement (131) und dem zweiten Turmwandverbindungsteilelement (132) angeordnet ist, so dass die Kabeldurchführung (137) und das erste Turmwandverbindungsteilelement (131) und das zweite Turmwandverbindungsteilelement (132) miteinander verschweißt sind.

10. Verfahren zum Erzeugen von Elektrizität mithilfe einer Windturbine (2), die von dem Turm (1) nach einem der Ansprüche 1 bis 8 getragen wird.

## Revendications

1. Mât (1) pour soutenir une éolienne (2) avec
- au moins un premier segment de cloison de mat (11) fait en acier ;
- au moins un second segment de cloison de mat (12) fait en acier ;
- au moins un élément de raccord de cloison de mat (13) fait en acier qui est agencé entre le premier segment de cloison de mat (11) et le second segment de cloison de mat (12) ; dans lequel
- le premier segment de cloison de mat (11) et l'élément de raccord de cloison de mat (13) sont soudés ensemble ;
- le second segment de cloison de mat (12) et l'élément de raccord de cloison de mat (13) sont soudés ensemble ; et
- l'élément de raccord de cloison de mat (13) comprend au moins un chemin de câble (130) pour guider un câble (14) de l'intérieur (16) du mat (1) à l'extérieur (17) du mat (1) dans lequel
- l'élément de raccord de cloison de mat (13) comprend au moins un premier élément de raccord de cloison de sous-mat (131) fait en acier et au moins un second élément de raccord de cloison de sous-mat (132) fait en acier ; **caractérisé en ce que**
- le premier élément de raccord de cloison de sous-mat (131) et le second élément de raccord de cloison de sous-mat (132) sont soudés ensemble,
dans lequel le chemin de câble (130) comprend un passe-câble (137) qui est agencé dans le raccord de soudure entre le premier élément de raccord de cloison de sous-mat (131) et le second élément de raccord de cloison de sous-mat (132), de manière que le passe-câble (137) et le premier élément de raccord de cloison de sous-mat (131) et le second élément de raccord de cloison de sous-mat (132) sont soudés ensemble.

2. Mat selon la revendication 1, dans lequel l'élément de raccord de cloison de mat (13), le premier élément de raccord de cloison de sous-mat (131) et/ou le second élément de raccord de cloison de sous-mat (132) comprennent au moins une patte soudée (135).

3. Mat selon l'une des revendications 1 ou 2, dans lequel l'élément de raccord de cloison de mat (13), le premier élément de raccord de cloison de sous-mat (131) et/ou le second élément de raccord de cloison de sous-mat comprennent au moins une forme (133) qui est sélectionnée à partir du groupe formé d'un anneau (1331) et d'une barre (1332).

4. Mat selon l'une des revendications 1 à 3, dans lequel le mat comprend au moins un composant d'éolienne électrique externe (22) et au moins un composant d'éolienne électrique interne (21) de l'éolienne (2) qui est électriquement connectée audit au moins un composant d'éolienne électrique externe (22) par au moins un câble (14) qui est passé à travers le chemin de câble (130).

5. Mat selon la revendication 4, dans lequel le composant d'éolienne électrique externe (22) est au moins un composant qui est sélectionné à partir du groupe formé d'un capteur de température et d'une antenne.

6. Mat selon l'une des revendications 1 à 5, dans lequel l'élément de raccord de cloison de mat (13), le premier élément de raccord de cloison de sous-mat (131) et/ou le second élément de raccord de cloison de sous-mat comprennent au moins un bord de soudure (15) qui est sélectionné à partir du groupe formé d'un bord de soudure orienté horizontalement (151) et d'un bord de soudure orienté verticalement (152).

7. Mat selon l'une des revendications 1 à 6, dans lequel le passe-câble (137) comprend un diamètre interne de passe-câble (1371) qui est sélectionné dans la plage comprise entre 10 mm et 30 mm.

8. Mat selon l'une des revendications 1 à 7, dans lequel le passe-câble (137) comprend un diamètre externe de passe-câble (1372) qui est sélectionné dans la plage comprise entre 30 mm et 70 mm.

9. Procédé de fabrication d'un mat selon l'une des revendications 1 à 8 comportant les étapes suivantes :
a) la fourniture du premier segment de cloison de mat (11), la fourniture du second segment de cloison de mat (12) et la fourniture de l'élément de raccord de cloison de mat (13) ; et
b) le soudage ensemble des segments de cloison de mat (11, 12) et de l'élément de raccord de cloison de mat (13) de manière que l'élément de raccord de cloison de mat est agencé entre les segments de cloison de mat dans lequel le procédé comprend
c) la fourniture de l'élément de raccord de cloison de mat (13) avec au moins un premier élément de raccord de cloison de sous-mat (131) fait en acier et au moins un second élément de raccord de cloison de sous-mat (132) fait en acier ; et
d) l'agencement du chemin de câble entre le premier élément de raccord de cloison de sous-mat (131) et le second élément de raccord de cloison de sous-mat (132),
e) le soudage ensemble du premier élément de raccord de cloison de sous-mat (131) et du second élément de raccord de cloison de sous-mat (132),
dans lequel le chemin de câble (130) comprend un passe-câble (137) qui est agencé dans le raccord de soudure entre le premier élément de raccord de cloison de sous-mat (131) et le second élément de raccord de cloison de sous-mat (132), de manière que le passe-câble (137) et le premier élément de raccord de cloison de sous-mat (131) et le second élément de raccord de cloison de sous-mat (132) sont soudés ensemble.

10. Procédé de production d'électricité par l'intermédiaire d'une éolienne (2) qui est soutenue par le mat (1) selon l'une des revendications 1 à 8.
